# FASCICULE DE BREVET EUROPEEN

(11) **EP 0 592 297 B1**
(45) Date de publication et mention de la délivrance du brevet: **21.02.1996**
(21) Numéro de dépôt: 93402432.4
(22) Date de dépôt: 04.10.1993
(51) Int. Cl.: F16D 3/62

(54) **Dispositif d'accouplement en rotation de deux arbres de transmission indépendants**
Drehkupplungsvorrichtung für zwei unabhängige Antriebswellen
Rotational coupling device for two independent driving shafts

(30) Priorité: 08.10.1992 FR 9211955
(43) Date de publication de la demande: 13.04.1994
(73) Titulaire: NEYRPIC FRAMATOME MECANIQUE, F-92400 Courbevoie (FR)
(72) Inventeur: Pere, Gérard, F-71670 le Breuil (FR)
(74) Mandataire: Lanceplaine, Jean-Claude

(56) Documents cités:
- EP-A- 0 397 524
- FR-A- 721 067
- GB-A- 551 342
- US-A- 2 145 542

## Description

La présente invention a pour objet un dispositif d'accouplement destiné à relier entre eux deux arbres de transmission rotatifs et alignés, pouvant subir un mouvement relatif de translation parallèlement à leur axe commun de rotation ainsi qu'un léger mouvement de déplacement angulaire relatif de leurs axes respectifs de rotation.

On connait de nombreuses réalisations d'accouplement entre deux arbres de transmission rotatifs, comme par exemple des dispositifs à cardan ou à plots élastiques qui permettent un désalignement des axes de rotation des arbres, mais qui n'autorisent pas un déplacement axial.

Pour satisfaire à ces deux conditions, on connait des accouplements souples ou télescopiques, mais qui sont relativement encombrants et complexes ce qui a un effet direct sur le coût et la maintenance de ces accouplements.

De plus, ce type d'accouplement réagit lentement compte tenu des organes de liaison, ce qui est incompatible avec des conditions de fonctionnement extrêmes, c'est à dire pour un couple important à des très grandes vitesses de rotation.

on connaît dans le GB-A-551 342 un dispositif d'accouplement en rotation de deux arbres de transmission indépendantes et alignés qui est formé par deux brides de raccordement montées chacune à l'une des extrémités en regard desdits arbres et reliées en périphérie et alternativement l'une à l'autre par des organes de liaison situés dans un même plan sensiblement perpendiculaire à l'axe de rotation desdits arbres et comportant chacun des éléments déformables. Les brides de raccordement adjacentes sont emboîtables l'une dans l'autre et formées chacune par un plateau périphérique comportant trois éléments d'entraînement uniformément répartis autour de l'axe de rotation desdits arbres.

la présente invention a pour but de proposer un dispositif d'accouplement en rotation de deux arbres de transmission qui permet de remédier aux inconvénients inhérents aux dispositifs connus et d'assurer la souplesse torsionnelle de l'accouplement ainsi que la filtration des éventuelles vibrations.

A cet effet, la présente invention propose un dispositif d'accouplement en rotation de deux arbres de transmission indépendants et alignés, formé par deux brides de raccordement montées chacune à l'une des extremités en regard desdits arbres et reliées en périphérie et alternativement l'une à l'autre par des organes de liaison situés dans un même plan sensiblement perpendiculaire à l'axe de rotation desdits arbres et comportant chacun des éléments déformables, lesdites brides de raccordement adjacentes étant emboîtables l'une dans l'autre et formées chacune par un plateau périphérique circulaire comportant des éléments d'entraînement, caractérisé en ce que les éléments d'entraînement sont formés par trois couples de plots d'entraînement cylindriques, radiaux.

Selon d'autres caractéristiques de l'invention :
- les couples de plots de chaque bride ménagent entre eux un espace libre pour le positionnement des couples de plots de la bride adjacente dans ledit plan sensiblement perpendiculaire à l'axe de rotation desdits arbres,
- chaque plot cylindrique a une forme conique,
- chaque organe de liaison est formé par une biellette comportant deux chapes disposées en regard l'une de l'autre, les extrémités libres des chapes étant montées libres en rotation chacune sur un plot des coupes de plots adjacents de chaque bride et les extrémités en vis -à-vis de ces chapes ménageant un logement pour les éléments déformables et étant reliées entre elles par lesdits éléments déformables,
- la première chape comporte à son extrémité disposée en vis-à-vis de la seconde chape, des pattes s'intercalant entre des pattes nénagées à l'extrémité de ladite seconde chape,
- les éléments déformables de chaque biellette de raccordement sont formés par deux coussins coaxiaux,
- une extrémité du premier coussin est solidaire du corps de la seconde chape de ladite biellette et l'autre extrémité dudit premier coussin est solidaire des pattes de la première chape de ladite biellette et une extrémité du second coussin est solidaire des pattes de ladite seconde chape et l'autre extrémité dudit second coussin est solidaire des pattes de ladite première chape,
- les coussins sont de forme cylindrique et en élastomère.

D'autres caractéristiques avantages de l'invention apparaîtront à la lecture de la description détaillée qui va suivre pour la compréhension de laquelle on se reportera aux dessins annexés, dans lesquels :
- la figure 1 est une vue schématique en coupe du dispositif d'accouplement en rotation de deux arbres de transmission, selon l'invention,
- la figure 2 est une vue de face de la première bride de raccordement du dispositif d'accouplement,
- la figure 3 est une vue en coupe selon la ligne 3.3 de la figure 2,
- la figure 4 est une vue de face de la seconde bride de raccordement du dispositif d'accouplement,
- la figure 5 est une vue en coupe selon la ligne 5.5 de la figure 4,
- la figure 6 est une vue montrant les deux brides de raccordement préassemblées,
- la figure 7 est une vue en bout du dispositif d'accouplement selon l'invention,
- la figure 8 est une vue de dessus d'une biellette du dispositif d'accouplement selon l'invention,
- la figure 9 est une vue en coupe selon la ligne 9.9 de la figure 8,
- la figure 10 est une vue en coupe selon la ligne 10.10 de la figure 9,
- la figure 11 est un schéma montrant le fonctionnement du dispositif d'accouplement selon l'invention,
- la figure 12 est une vue schématique en coupe d'une variante du dispositif d'accouplement selon l'invention.

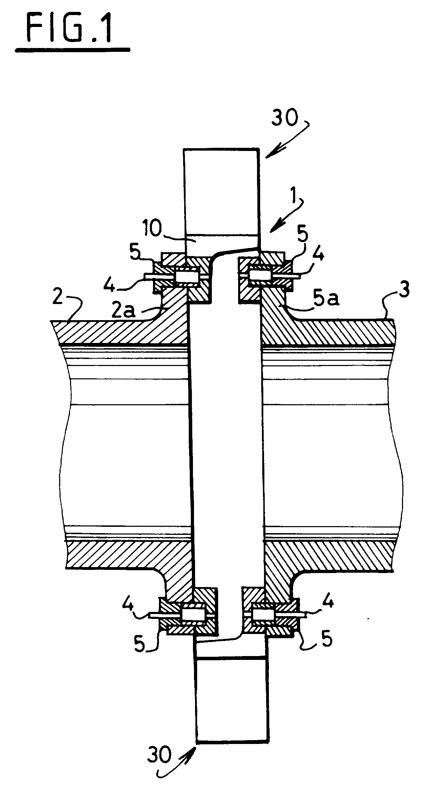

Le dispositif d'accouplement représenté schématiquement à la figure 1 et désigné dans son ensemble par la référence 1, est destiné à relier entre eux deux arbres de transmission 2 et 3 rotatifs et alignés, un arbre menant par exemple 2 et un arbre mené par exemple 3.

Ces arbres 2 et 3 peuvent subir un mouvement relatif de translation parallèlement à leur axe commun de rotation ainsi qu'un léger mouvement de déplacement angulaire relatif de leurs axes respectifs de rotation.

Les arbres 2 et 3 peuvent être de section cylindrique ou quelconque et peuvent également être creux ou pleins.

Le dispositif d'accouplement 1 se compose d'une première bride de raccordement 10 fixée à l'extrémité 2a de l'arbre 2 au moyen de goujons de fixation 4 et d'écrous de serrage 5 et d'une seconde bride de raccordement 20 fixée sur l'extrémité 3a de l'arbre 3 également au moyen de goujons de fixation 4 et d'écrous de serrage 5.

Les brides de raccordement 10 et 20 sont reliées entre elles en périphérie et alternativement l'une à l'autre par des organes de liaison 30 situés dans un même plan sensiblement perpendiculaire à l'axe desdits arbres et comportant chacun des éléments déformables, comme on le verra ultérieurement.

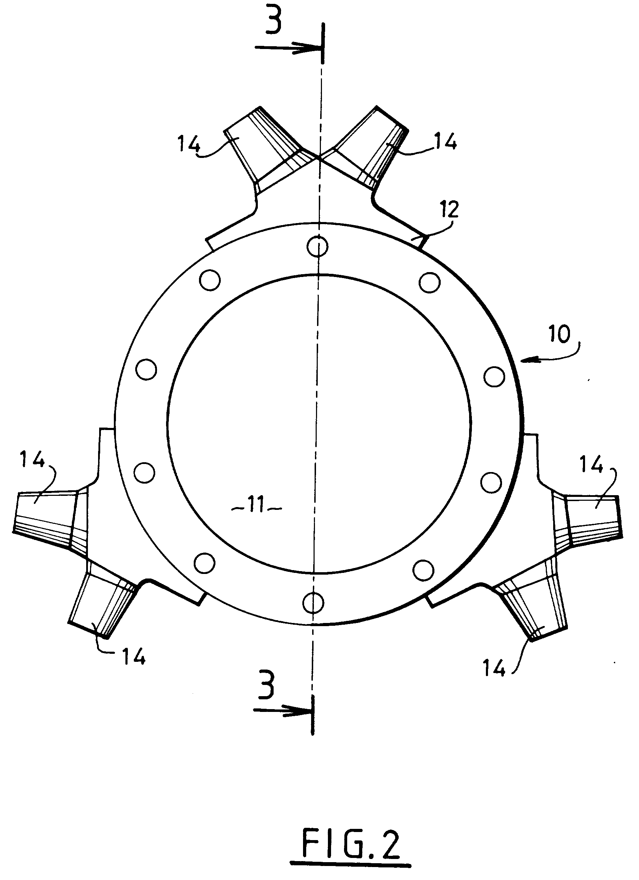

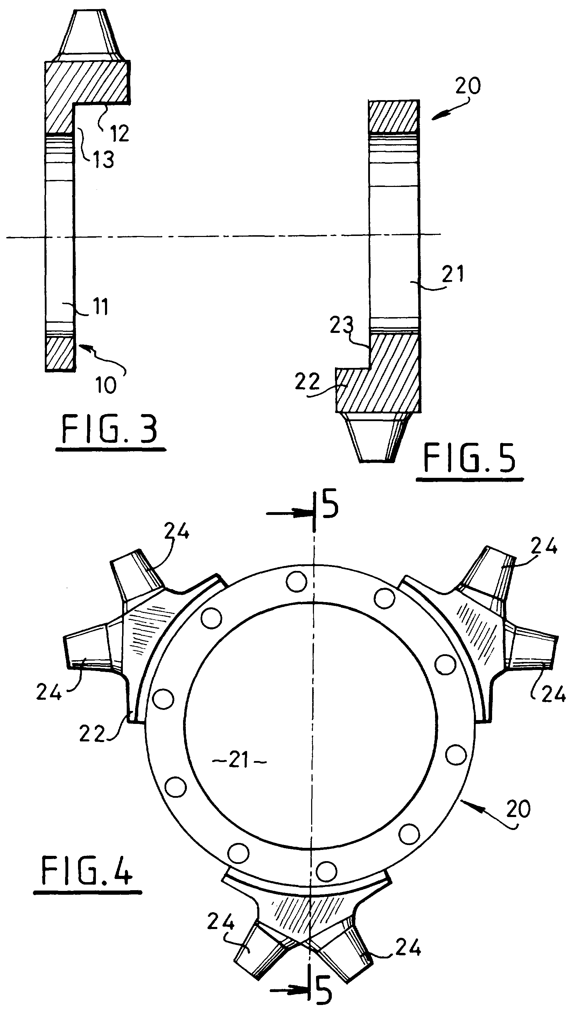

Ainsi que représenté sur les figures 2 et 3, la première bride de raccordement 10 fixée sur l'extrémité 2a de l'arbre 2 comporte un alésage central 11 et un plateau périphérique 12 circulaire formant un lamage interne 13.

Le plateau périphérique 12 comporte extérieurement trois couples de plots d'entrainement 14 radiaux et uniformément répartis autour de l'axe de rotation de l'arbre 2.

Les couples de plots 14 forment entre eux un angle de 120° et les axes des deux plots 14 de chaque couple sont inclinés l'un par rapport à l'autre en direction de l'axe de la bride 10.

Les plots 14 sont cylindriques et de forme conique.

Comme représenté sur les figures 4 et 5, la seconde bride de raccordement 20 fixée sur l'extrémité 3a de l'arbre 3 comporte un alésage central 21 et un plateau périphérique 22 circulaire formant un lamage interne 23. Le plateau périphérique 22 comporte extérieurement trois couples de plots d'entrainement 24 radiaux et uniformément répartis autour de l'axe de rotation de l'arbre 3.

Les couples de plots 24 forment entre eux un angle de 120° et les axes des deux plots 24 de chaque couple sont inclinés l'un par rapport à l'autre en direction de l'axe de la bride 20.

Les plots 24 sont également cylindriques et de forme conique.

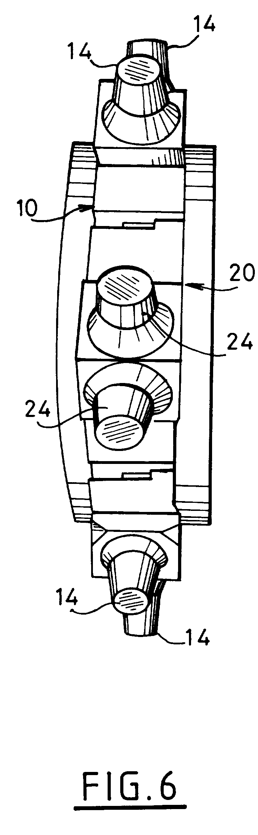

Comme cela est illustré à la figure 6, les brides 10 et 20 sont emboîtables l'une dans l'autre et les couples de plots 14 de la première bride 10 ménagent entre eux un espace libre pour le positionnement des couples de plots 24 de la seconde bride 20 de telle manière que les axes des plots 14 et 24 soient situés sensiblement dans un même plan perpendiculaire à l'axe des brides 10 et 20.

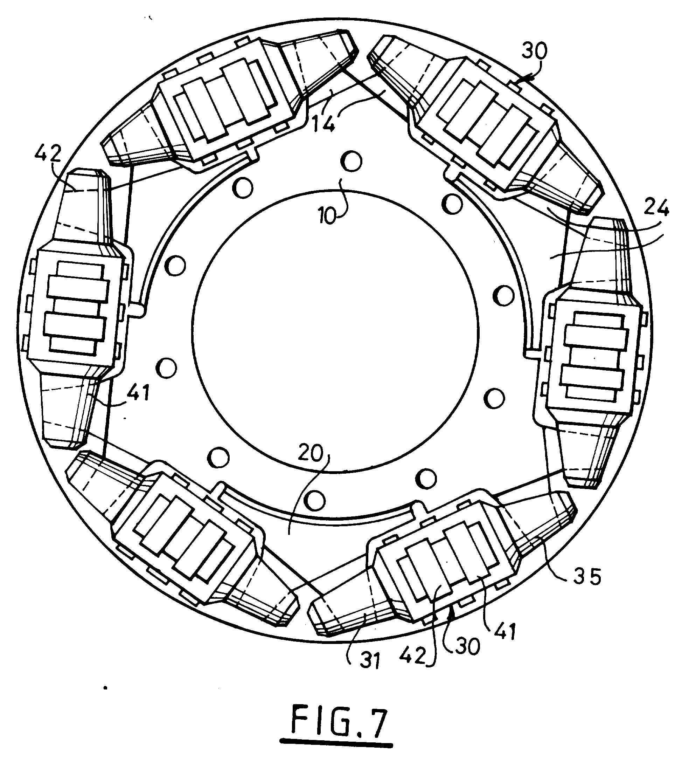

Ces organes de liaison sont constitués par des biellettes d'entrainement 30 reliant alternativement un plot 14 de la bride 10 avec un plot 24 de la bride 20 et cela pour l'ensemble des couples de plots 14 et 24, comme représenté sur la figure 7.

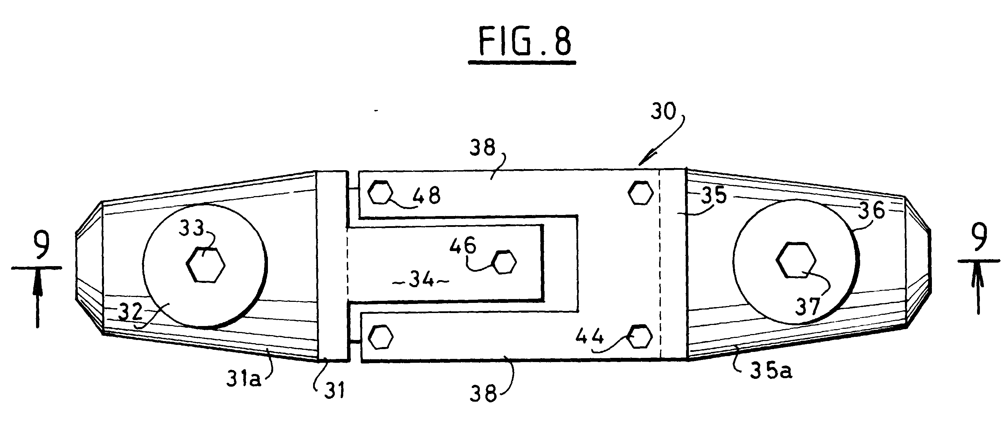

En se reportant aux figures 8 à 10, on va décrire une biellette d'entrainement 30, toutes les bielletes 30 étant, dans ce mode de réalisation, identiques.

Chaque biellette d'entrainement 30 est formée de deux chapes 31 et 35 disposées en regard l'une de l'autre et dont le corps de chacune desquelles est sensiblement parallèlèpipédique.

L'extrémité libre 31a de la chape 31 comporte un alésage débouchant 32 destiné à recevoir un plot 14 de la bride 10 et est montée sur ledit plot correspond libre en rotation, par exemple au moyen d'une bague conique et de roulements non représentés.

Cette chape 31 est maintenue sur le plot 14 par une vis 33.

L'extrémité 35a de la chape 35 comporte un alésage débouchant 36 destiné à recevoir un plot 24 de la bride 20 et est montée sur ledit plot correspondant libre en rotation, par exemple au moyen d'une bague conique et de roulements non représentés.

Cette chape 35 est maintenue sur le plot 24 par une vis 37.

Le corps de la chape 31 comporte sur sa face disposée en vis-à-vis de la chape 35 et au milieu de son rebord supérieur et inférieur, une patte 34 s'étendant perpendiculairement au corps de ladite chape 31.

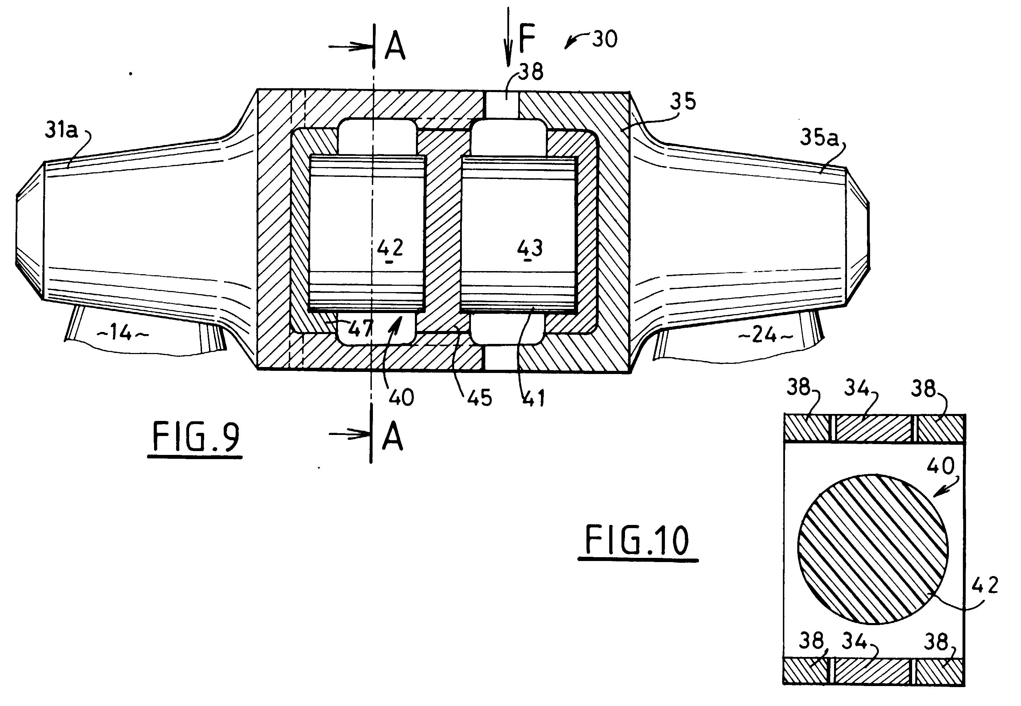

Le corps de la chape 35 comporte sur sa face disposée en vis-à-vis de la chape 31 et au niveau de son rebord supérieur et inférieur, deux pattes 38 s'étendant perpendiculairement au corps de ladite chape 35 et ménageant entre elles un espace pour le positionnement des pattes 34 de la chape 31, comme cela est représenté sur les figures 8 et 10.

Les pattes 34 et 38 des chapes 31 et 35 ménagent un logement pour des éléments déformables 40 qui relient entre elles lesdites chapes 31 et 35.

Les éléments déformables 40 sont formés par deux coussins coaxiaux 41 et 42, par exemple de forme cylindrique et en élastomère.

Une extrémité du premier coussin 41 est solidaire d'une plaque d'appui 43 qui elle-même fixée sur la chape 35 au moyen de vis 44. L'extrémité opposée du premier coussin 41 est solidaire d'une plaque d'appui intermédiaire 45 qui est fixée sur les pattes 34 de la chape 31 au moyen de vis 46.

Une extrémité du second coussin 42 est solidaire d'une plaque d'appui 47 qui elle-même fixée sur les extrémités des pattes 38 de la chape 35 au moyen de vis 48 tandis que l'extrémité opposée de ce coussin 42 est solidaire de la plaque d'appui intermédiaire 45 fixée sur les pattes 34 de la chape 31.

Les coussins 41 et 42 sont fixés sur les plaques d'appui 43, 45 et 47 par des moyens appropriés non représentés.

Lorsque les biellettes 30 sont montées sur les plots 14 et 24 des brides 10 et 20, cet ensemble forme un accouplement entre les arbres 2 et 3 qui permet un mouvement relatif de translation desdits arbres parallèlement à leur axe commun de rotation ainsi qu'un léger mouvement de déplacement angulaire relatif de leurs axes respectifs de rotation.

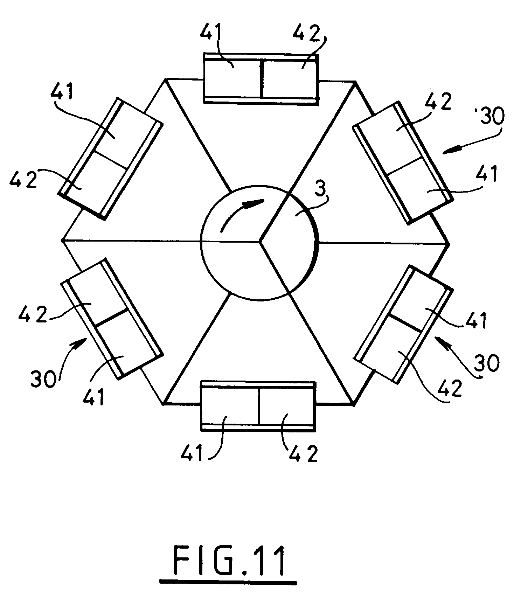

Le schéma de la figure 11 montre le fonctionnement du dispositif d'accouplement selon l'invention.

En marche avant, c'est à dire lors de la rotation de l'arbre menant 2, les coussins 42 de chaque biellette 30 sont comprimés et le couple moteur est transmis à l'arbre mené 3. Les coussins 42 sont comprimés d'une cote variable et proportionnelle à la valeur du couple transmis.

En marche arrière, les coussins 41 de chaque biellette 30 sont alors comprimés.

Ces coussins 41 sont comprimés d'une cote variable proportionnelle à la valeur du couple transmis.

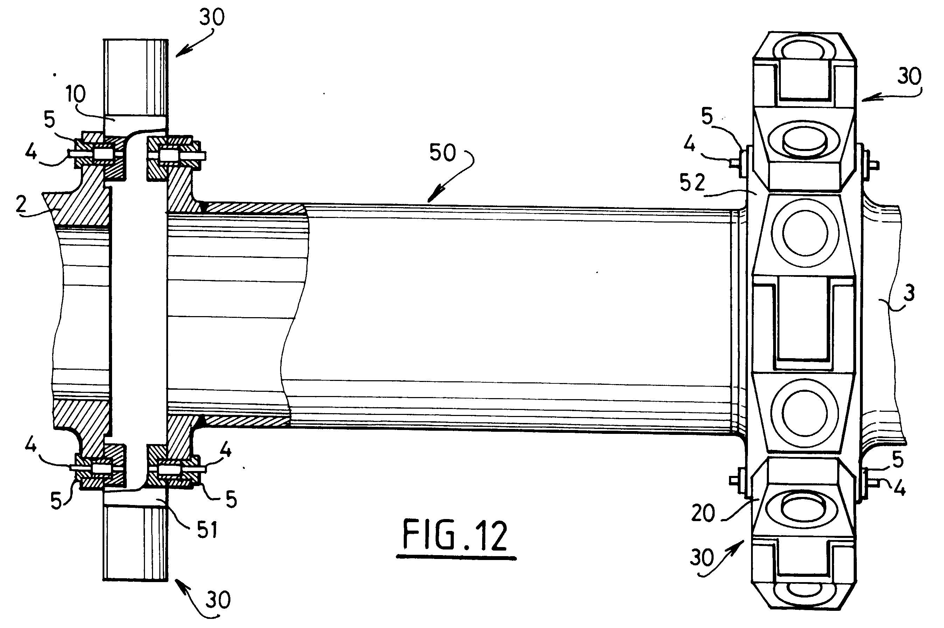

Selon une variante représentée à la figure 12, une allonge 50 de section par exemple cylindrique est disposée entre les extrémités 2a et 3a des arbres 2 et 3.

Cette allonge 50 comporte à chacune de ses extrémités une bride de raccordement, respectivement 51 et 52, destinée à coopérer avec la bride de raccordement adjacente, respectivement 10 et 20 des arbres 2 et 3 par l'intermédiaire des biellettes 30.

Ce mode de réalisation autorise un mouvement de déplacement angulaire relatif des axes respectifs de rotation des arbres 2 et 3 plus important que pour le précédent mode de réalisation.

Le dispositif d'accouplement selon la présente invention est de conception facilement industrialisable et présente l'avantage d'utiliser des éléments interchangeables et également de supprimer les liaisons métalliques ce qui permet d'éviter la transmission des vibrations.

Le dispositif d'accouplement selon la présente invention autorise les cas de figures suivants:
- un désalignement axial et/ou angulaire des arbres sans transmission d'efforts parasites,
- une transmission d'un couple sans désalignement des arbres,
- un désalignement radial des arbres sans transmission d'efforts parasites,
- et une transmission d'un couple avec désalignement axial desdits arbres.

## Revendications

1. Dispositif d'accouplement en rotation de deux arbres de transmission (2, 3) indépendants et alignés, formé par deux brides de raccordement (10, 20) montées chacune à l'une des extrémités en regard desdits arbres (2, 3) et reliées en périphérie et alternativement l'une à l'autre par des organes de liaison (30) situés dans un même plan sensiblement perpendiculaire à l'axe de rotation desdits arbres (2, 3) et comportant chacun des éléments déformables (40), lesdites brides de raccordement (10, 20) adjacentes étant emboîtables l'une dans l'autre et formées chacune par un plateau périphérique (12, 22) circulaire comportant des éléments d'entraînement uniformément répartis autour de l'axe de rotation desdits arbres (2, 3), caractérisé en ce que les éléments d'entraînement sont formés par trois couples de plots d'entraînement (14, 24) cylindriques, radiaux.

2. Dispositif selon la revendication 1, caractérisé en ce que les couples de plots (14, 24) de chaque bride (10, 20) ménagent entre eux un espace libre pour le positionnement des couples de plots (14, 24) de la bride adjacente (10, 20) dans ledit plan sensiblement perpendiculaire à l'axe de rotation desdits arbres (2, 3).

3. Dispositif selon les revendications 1 et 2, caractérisé en ce que chaque plot (14, 24) cylindrique a une forme conique.

4. Dispositif selon l'une quelconque des revendications précédentes, caractérisé en ce que chaque organe de liaison est formé par une biellette (30) comportant deux chapes (31, 35) disposées en regard l'une de l'autre, les extrémités libres des chapes (31, 35) étant montées libres en rotation chacune sur un plot (14, 24) des couples de plots adjacents de chaque bride de raccordement (10, 20) et les extrémités en vis-à-vis de ces chapes (31, 35) ménageant un logement pour les éléments déformables (40) et étant reliées entre elles par lesdits éléments déformables (40).

5. Dispositif selon la revendication 4, caractérisé en ce que la première chape (31) comporte à son extrémité disposée en vis-à-vis de la seconde chape (35), des pattes (34) s'intercalant entre des pattes (38) ménagées à l'extrémité de ladite seconde chape (35).

6. Dispositif selon les revendications 1 et 4, caractérisé en ce que les éléments déformables (40) de chaque biellette de raccordement (10, 20) sont formés par deux coussins coaxiaux (41, 42).

7. Dispositif selon l'une quelconque des revendications précédentes, caractérisé en ce qu' une extrémité du premier coussin (41) est solidaire du corps de la seconde chape (35) de ladite biellette (30) et l'autre extrémité dudit premier coussin (41) est solidaire des pattes (34) de la première chape (31) et une extrémité du second coussin (42) est solidaire des pattes (38) de ladite seconde chape (35) et l'autre extrémité dudit second coussin (42) est solidaire des pattes (34) de ladite première chape (31).

8. Dispositif selon les revendications 6 et 7, caractérisé en ce que les coussins (41, 42) sont de forme cylindrique et en élastomère.

9. Dispositif selon l'une quelconque des revendications précédentes, caractérisé en ce qu'il comprend une allonge (50) disposée entre les extrémités des arbres (2, 3) et comportant à chaque extrémité une bride de raccordement (51, 52) destinée à coopérer avec la bride de raccordement (10, 20) adjacente desdits arbres (2, 3).

## Claims

1. Rotational coupling device for two independent, aligned transmission shafts (2, 3), formed by two connecting flanges (10, 20) each mounted at one of the opposing ends of said shafts (2, 3) and connected at the periphery and alternately to one another by connecting members (30) located in the same plane, substantially perpendicular to the rotation axis of said shafts (2, 3), and each comprising deformable elements (40), said adjacent connecting flanges (10, 20) being adapted to fit one inside the other and each being formed by a circular peripheral surface (12, 22) comprising drive elements uniformly distributed about the rotation axis of said shafts (2, 3), characterised in that the drive elements are formed by three pairs of radial, cylindrical drive studs (14, 24).

2. Device according to claim 1, characterised in that the pairs of studs (14, 24) on each flange (10, 20) define between them a free space for the positioning of the pairs of studs (14, 24) of the adjacent flange (10, 20) in said plane which is substantially perpendicular to the rotation axis of said shafts (2, 3).

3. Device according to claims 1 and 2, characterised in that each cylindrical stud (14, 24) is conical in shape.

4. Device according to any one of the preceding claims, characterised in that each connecting member is formed by a connecting rod (30) having two straps (31, 35) arranged opposite each other, the free ends of the straps (31, 35) each being mounted to be freely rotatable on one stud (14, 24) of the pairs of adjacent studs of each connecting flange (10, 20) and the opposing ends of these straps (31, 35) defining a housing for the deformable elements (40) and being connected to one another by said deformable elements (40).

5. Device according to claim 4, characterised in that the first strap (31) has, at its end opposite the second strap (35), lugs (34) which are intercalated between lugs (38) formed on the end of said second strap (35).

6. Device according to claims 1 and 4, characterised in that the deformable elements (40) of each connecting rod (10, 20) are formed by two coaxial pads (41, 42).

7. Device according to any one of the preceding claims, characterised in that one end of the first pad (41) is integral with the body of the second strap (35) of said connecting rod (30) and the other end of said first pad (41) is integral with the lugs (34) of the first strap (31) and one end of the second pad (42) is integral with the lugs (38) of said second strap (35) and the other end of said second pad (42) is integral with the lugs (34) of said first strap (31).

8. Device according to claims 6 and 7, characterised in that the pads (41, 42) are cylindrical in shape and made of elastomer.

9. Device according to any one of the preceding claims, characterised in that it comprises an elongated portion (50) arranged between the ends of the shafts (2, 3) and having, at each end, a connecting flange (51, 52) adapted to cooperate with the adjacent connecting flange (10, 20) of said shafts (2, 3).

## Patentansprüche

1. Drehkupplungsvorrichtung für zwei unabhängige und gleichachsig ausgerichtete Antriebswellen (2, 3), mit zwei Anschlußflanschen (10, 20), die jeweils an einem der sich gegenüberliegenden Enden der Wellen (2, 3) befestigt sind und an ihrem Rand abwechselnd durch Verbindungsorgare (30) miteinander verbunden sind, die in derselben Ebene ungefähr senkrecht zur Drehachse der Wellen (2, 3) lieger und jeweils verformbare Elemente (40) aufweisen, wobei die gegenüberliegendenden Verbindungsflansche (10, 20) ineinander steckbar sind und jeweils aus einer kreisrunden peripheren Scheibe bestehen, die die Antriebselemente aufweist, welche gleichmäßig verteilt um die Drehachse der Wellen (2, 3) angeordnet sind, dadurch gekennzeichnet, daß die Antriebselemente aus drei Paaren radial angeordneten zylinderförmigen Antriebsklötzen (14, 24) bestehen.

2. Vorrichtung nach Anspruch 1, dadurch gekennzeichnet, daß die Paare der Klötze (14, 24) eines jeden Flansches (10, 20) zwischen sich einen freien Raum für die Positionierung der Klotzpaare (14, 24) des benachbarten Flansches (10, 20) in der Ebene freilassen, die etwa senkrecht zur Drehachse der Wellen (2, 3) verläuft.

3. Vorrichtung nach Anspruch 1 und 2, dadurch gekennzeichnet, daß jeder zylinderförmige Klotz (14, 24) eine kcnische Form aufweist.

4. Vorrichtung nach einem der vorstehenden Ansprüche, dadurch gekennzeichnet, daß jedes Verbindungsorgan als Anlenkpleuelstange (30) ausgebildet ist, mit zwei Gabelköpfen (31, 35), die einander gegenüber angeordnet sind und wobei die freien Enden der Gabelköpfe (31, 35) frei drehbar jeweils auf einem Klotz (14, 24) der Paare benachbarter Klötze eines jeden Verbindungsflansches (10, 20) befestigt sind und die Enden, die den Gabelköpfen (31, 35) gegenüberliegen, bilder ein Lager für die verformbaren Elemente (40), und sind untereinander durch diese verformbaren Elemente (40) verbunder.

5. Vorrichtung nach Anspruch 4, dadurch gekennzeichnet, daß der erste Gabelkopf (31) an seinem dem zweiten Gabelkopf (35) gegenüberliegenden Ende Finger (34) aufweist, die zwischen Finger (38) greifen, die am Ende des zweiten Gabelkopfes (35) ausgebildet sind.

6. Vorrichtung nach den Ansprüchen 1 und 4, dadurch gekennzeichnet, daß die verformbaren Elemente (40) einer jeden Kupplungspleuelstange (10, 20) durch zwei koaxiale Puffer (41, 42) gebildet sind.

7. Vorrichtung nach einem der vorstehenden Ansprüche, dadurch gekennzeichnet, daß ein Ende des ersten Puffers (41) mit dem Körper des zweiten Gabelkopfes (35) der Pleuelstange (30) fest verbunden ist und das andere Ende des ersten Puffers (41) mit den Fingern (34) des ersten Gabelkopfes (31) fest verbunden ist und ein Ende des zweiten Puffers (42) mit den Fingern (38) des zweiten Gabelkopfes (35) fest verbunden ist und das andere Ende des zweiten Puffers (42) mit den Fingern (34) des ersten Gabelkopfes (31) fest verbunden ist.

8. Vorrichtung nach den Ansprüchen 6 und 7, dadurch gekennzeichnet, daß die Puffer (41, 42) zylinderförmig sind und aus einem Elastomer bestehen.

9. Vorrichtung nach einem der vorstehenden Ansprüche, gekennzeichnet durch eine Verlängerung (50) zwischen den Enden der Wellen (2, 3), die an jedem Ende einen Verbindungsflansch (51, 52) aufweist, der mit dem angrenzenden verbindungsflansch (10, 20) der Wellen (2, 3) zusammenwirkt.
